# EUROPEAN PATENT APPLICATION

(11) **EP 1 420 056 A1**
(43) Date of publication of application: **19.05.2004**
(21) Application number: 02741280.8
(22) Date of filing: 25.06.2002
(51) Int. Cl.: C09J 201/06, G02F 1/1335, G02B 1/10, G02B 5/20, G02B 7/00

(54) **OPTICAL FUNCTION MEMBER INTEGRATED DISPLAY UNIT-USE ADHESIVE COMPOSITION AND OPTICAL FUNCTION MEMBE INTEGRATED DISPLAY UNIT**

(30) Priority: 26.06.2001 JP 2001192377
(71) Applicant: BRIDGESTONE CORPORATION, Tokyo 104-0031 (JP)
(72) Inventor: KOTSUBO, Hidefumi, Kodaira-shi, Tokyo 187-0031 (JP); INAMIYA, Takato, Kodaira-shi, Tokyo 187-0031 (JP); KITANO, Hideki, Kodaira-shi, Tokyo 187-0031 (JP)
(74) Representative: Watson, Robert James
(86) International application number: PCT/JP2002/006319
(87) International publication number: WO 2003/000820

(57) **Abstract**

An adhesive composition to be used for production of a display unit integrally combined with an optically functional member by bonding together the display unit and the optically functional member, wherein the adhesive composition is characterized by being incorporated with a compound having one or more hydroxyl groups. A display unit combined with an optically functional member in which the display unit and the optically functional member are bonded together by means of an adhesive layer, wherein the adhesive layer is characterized by being formed from the adhesive composition.

## Description

### TECHNICAL FIELD

The present invention relates to an adhesive composition for a display unit integrally combined with an optically functional member, and also to a display unit which is integrally combined with an optically functional member by using the adhesive composition. The adhesive composition is suitable for production of a display unit integrally combined with an optically functional member and is capable of forming an adhesive layer which is superior in transparency, moisture resistance, and peel resistance.

### BACKGROUND ART

There has been an display unit integrally combined with an optically functional member, in which the former is a CRT or LCD and the latter is any one of antireflection film, antireflection glass, antistatic glass, antistatic film, electromagnetic wave shielding material, near infrared absorbing film, and color filter. Such a display unit is widely used for ATM's and CD's in banks, automatic ticket vending machines in stations, portable information terminals, portable telephones, personal computers, etc.

The display unit integrally combined with an optically functional member is usually formed by applying an adhesive to either or both of the display unit and the optically functional member (which is an antireflection glass or the like) and bonding them together by curing the adhesive. Therefore, it has an adhesive layer between the two parts.

However, this adhesive layer is liable to become hazy upon absorption of moisture in a humid atmosphere. The hazy adhesive layer makes the display screen less visible; it even peels off.

### DISCLOSURE OF THE INVENTION

The present invention was completed in view of the foregoing. It is an object of the present invention to provide an adhesive composition for a display unit integrally combined with an optically functional member, and also to provide a display unit which is integrally combined with an optically functional member by using the adhesive composition. The adhesive composition is suitable for production of a display unit integrally combined with an optically functional member and is capable of forming an adhesive layer which is superior in transparency, moisture resistance, and peel resistance.

In order to achieve the above-mentioned object, the present inventors carried out a series of researches which led to the following findings on which the present invention is based. A specific adhesive composition should be used to bond an optically functional member to a display unit for the production of a display unit integrally combined with an optically functional member. The adhesive composition, which is incorporated with a compound having one or more hydroxyl groups, yields a good adhesive layer upon curing. The adhesive layer is superior in transparency, moisture resistance, and peel resistance and is also superior in durability in a humid atmosphere. It hardly becomes hazy and hence keeps the display screen highly visible. Therefore, the display unit which is integrally combined with an optically functional member by using the adhesive composition exhibits good durability in a humid atmosphere and provides an easy-to-see display screen with a remote possibility of becoming hazy.

Accordingly, the present invention is directed to an adhesive composition for a display unit integrally combined with an optically functional member, and also to a display unit integrally combined with an optically functional member, which are specifically defined in the following.
(1) An adhesive composition to be used for production of a display unit integrally combined with an optically functional member by bonding together the display unit and the optically functional member, wherein the adhesive composition is characterized by being incorporated with a compound having one or more hydroxyl groups.
(2) A display unit integrally combined with an optically functional member in which the display unit and the optically functional member are bonded together by means of an adhesive layer, wherein the adhesive layer is characterized by being formed from the adhesive composition.

### BEST MODE FOR CARRYING OUT THE INVENTION

The adhesive composition according to the present invention is one which is suitable for bonding together a display unit and an optically functional member, thereby producing a display unit integrally combined with an optically functional member. It may be of heat-curable type or photo-curable type, or both.

The adhesive composition of the present invention may be incorporated with any known ingredient as a base polymer. Typical examples of the base polymer include synthetic rubber such as polyisoprene and polybutadiene, olefin elastomer such as EVA, polyurethane elastomer, polyvinyl butyral, vinyl chloride elastomer, styrene elastomer such as SBS and SIS, acrylic resin, and silicone polymer. Of these examples, acrylic resin is preferable.

The adhesive composition of the present invention should be incorporated with a compound having one or more hydroxyl groups as an essential ingredient. Examples of such a compound include hydroxyethyl acrylate, hydroxypropyl acrylate, hydroxyethyl methacrylate, and glycerol dimethacrylate. Each of these compounds contains at least one hydroxyl group. Of these compounds, (meth)acrylates are most desirable which have hydroxyl groups capable of reacting with other ingredients at the time of curing.

The adhesive composition of the present invention may be incorporated with a material which is compatible with the base polymer and is based on a compound containing hydroxyl groups. Examples of such a material include rosin ester (and other rosin derivatives) and terpene resin, which all function as a tackifier and also as a moisture resistance improver. The rosin derivatives are formed from gum resin, tall oil resin, wood resin, or the like by hydrogenation, disproportionation, esterification, or conversion into metal salt. The terpene resin includes α-pinene and β-pinene as well as terpene phenol resin.

According to the present invention, the hydroxyl group-containing compound mentioned above should be used, regardless of its kind, in an amount of 1 to 100 pbw, preferably 5 to 50 pbw, for 100 pbw of the base polymer mentioned above. With an excessively small amount, it will not produce the effect of improving moisture resistance. With an excessively large amount, it partly separates out to bleed through the surface of the film. This bleeding makes the film entirely hazy.

The adhesive composition of the present invention may be incorporated with additional ingredients such as organic peroxide and/or photosensitizer. They are intended to impart curability and photo-curability, respectively, to the adhesive composition. They may be used in combination if both properties are required.

The organic peroxide used for the adhesive composition of the present invention should preferably be one which decomposes to evolve radicals at 70°C or above, more preferably one which has a half-life of 10 hours at 50°C or above. The selection of the organic peroxide depends on the condition under which the adhesive composition is prepared, the temperature at which the adhesive layer is formed, and the storage stability of the adhesive composition.

Examples of usable organic peroxides are listed below. For example, 2,5-dimethylhexane-2,5-dihydroxyperoxide; 2,5-dimethyl-2,5-di(t-butylperoxy)hexyne-3; di-t-butylperoxide; t-butylcumyl peroxide; 2,5-dimethyl-2,5-di(t-butylperoxy)hexane; dicumyl peroxide; α,α'-bis(t-butylperoxyisopropyl)benzene; n-butyl-4,4-bis-(t-butylperoxy)valerate; 2,2-bis(t-butylperoxy)butane; 1,1-bis(t-butylperoxy)cyclohexane; 1,1-bis(t-butylperoxy)-3,3,5-trimethylcyclohexane; t-butylperoxybenzoate; benzoyl peroxide; t-butylperoxy acetate; methyl ethyl ketone peroxide; t-butylhydroperoxide; p-menthanehydroperoxide; hydroxyheptylperoxide; chlorohexanone peroxide; octanoyl peroxide; decanoyl peroxide; lauroyl peroxide; cumyl peroxyoctoate; succinic acid peroxide; acetylperoxide; t-butylperoxy(2-ethylhexanoate); m-toluoylperoxide; benzoyl peroxide; t-butylperoxyisobutyrate; and 2,4-dichlorobenzoylperoxide. The amount of the organic peroxide may be properly adjusted according to the intended curing temperature and time and the intended physical properties of the adhesive layer. These organic peroxides may be used singly or in combination with one another.

The amount of the above-mentioned organic peroxide should be 1 to 10 pbw, preferably 0.2 to 2.0 pbw, for 100 pbw of the base polymer. With an excessively small amount, the organic peroxide does not accomplish curing necessary for sufficient durability. With an excessively large amount, the organic peroxide gives rise to undesirable by-products and unreacted products, thereby adversely affecting the performance.

The above-mentioned photosensitizer may be one of the radical photopolymerization initiators which are exemplified below. Benzophenone, methyl orthobenzoylbenzoate, 4-benzoyl-4'-methyldiphenylsulfide, isopropylthioxanthone, diethylthioxanthone, ethyl-4-(diethylamino)-benzoate, benzoin ether, benzyl methyl ketal, and α-hydroxyalkylphenone such as 2-hydroxy-2-methyl-1-phenylpropan-1-one, 1-hydroxycyclohexyl phenyl ketone, alkylphenylglyoxylate, and diethoxyacetophenone. Additional examples include α-aminoalkylphenone such as 2-methyl-1-[4-(methylthio)phenyl]-2-moripholinopropane-1,2-benzyl-2-dimethylamino-1-(4-moripholinophenyl)-butanone-1 and acylphosphine oxide or the like. They should be properly selected according to the spectral characteristics and intensity of the light source and the intended physical properties. They may be used singly or in combination with one another.

The amount of the photosensitizer mentioned above should be 0.1 to 10 pbw, preferably 0.2 to 2.0 pbw, for 100 pbw of the base polymer mentioned above. With an excessively small amount, the photosensitizer does not accomplish curing necessary for sufficient durability. With an excessively large amount, the photosensitizer gives rise to undesirable by-products and unreacted products, thereby adversely affecting the performance.

When the organic peroxide and photosensitizer mentioned above are used in combination, the amount of the organic peroxide should be 0.1 to 10 pbw, preferably 0.2 to 2 pbw, for 100 pbw of the base polymer and the amount of the photosensitizer should be 0.1 to 10 pbw, preferably 0.2 to 2.0 pbw, for 100 pbw of the base polymer.

The adhesive composition of the present invention may optionally be incorporated with one or more silane coupling agents as an adhesion promoter. The silane coupling agent includes, for example, vinyltriethoxysilane, vinyltris(β-methoxyethoxy)silane, γ-methacryloxypropyltrimethoxysilane, vinyltriacetoxysilane, γ-glycidoxypropyltrimethoxysilane, γ-glycidoxypropyltriethoxysilane, β-(3,4-epoxycyclohexyl)ethyltrimethoxysilane, γ-chloropropylmethoxysilane, vinyltrichlorosilane, γ-mercaptopropylmethoxysilane, γ-aminopropyltriethoxysilane, and N-β(aminoethyl)-γ-aminopropyltrimethoxysilane. They may be used singly or in combination with one another. The amount of the silane coupling agent should be 0.01 to 5 pbw, preferably 0.1 to 3.0 pbw, for 100 pbw of the base polymer mentioned above. The silane coupling agent in an excessively small amount will result in poor adhesion.

The adhesive composition of the present invention may be prepared by mixing the above-mentioned ingredients in the usual way. It should be cured under adequate conditions selected according to the organic peroxide contained therein. The curing temperature is usually 70 to 170°C, preferably 70 to 150°C, and the curing time is usually 2 to 60 minutes, preferably 5 to 30 minutes. Curing should be carried out under a pressure of 0.01 to 50 kgf/cm², preferably 0.1 to 20 kgf/cm².

In the case of photocuring with a photosensitizer, the light source should be one which emits light in the ultraviolet region to the visible region. Examples of the light source include mercury lamps of ultra-high-pressure type, high-pressure type, and low-pressure type, chemical lamp, xenon lamp, halogen lamp, mercury halogen lamp, carbon arc lamp, incandescent lamp, and laser light. The duration of irradiation varies depending on the kind and intensity of the light source used. It is usually tens of seconds to tens of minutes.

In the case where the organic peroxide and the photosensitizer are used in combination with each other, the above-mentioned conditions should be properly adjusted according to the ingredients added.

The adhesive composition of the present invention may be used as an adhesive to be applied directly to a display unit combined with an optically functional member. It may be conveniently used in the form of film. In this case, film is prepared from the adhesive composition by calendering, extrusion, or pressing, and then the resulting film is stuck onto a previously prepared release sheet while the film is still in a molten state. Alternatively, the film is prepared by casting a solution of the adhesive composition in toluene onto a release sheet and the resulting cast film is covered with another release sheet.

In this case, any known release sheet may be used, such as the one which is based on polyethylene terephthalate (PET), polyethylene (PE), or polypropylene (PP). Particularly, PET is preferable.

According to the present invention, the display unit integrally combined with an optically functional member is made up of a display unit and an optically functional member which are bonded together by means of an adhesive layer formed from the above-mentioned adhesive composition.

The optically functional member used for the display unit according to the present invention includes, for example, antireflection glass, antireflection film, antistatic glass, antistatic film, electromagnetic wave shielding material, near infrared absorbing film, color filter, and touch panel, which are all transparent to light. The display unit includes, for example, cathode ray tube (CRT) and liquid crystal display (LCD).

According to the present invention, the display unit integrally combined with an optically functional member has an adhesive layer interposed between the display unit and the optically functional member so that they are bonded together. Bonding is accomplished by applying the adhesive composition of the present invention directly to the adhesive surface of the display unit and/or the optically functional member, or by sticking a film formed from the adhesive composition to the adhesive surface. The bonding method is not specifically restricted.

The direct application of the adhesive composition may be accomplished by dissolving the adhesive composition in an inert solvent which has no adverse effect on the display unit and optically functional member, uniformly spreading the resulting solution on the adhesive surface of the display unit and optically functional member, temporarily bonding them together under pressure, and finally curing the adhesive composition by heating.

In the case where the adhesive composition is in the form of film sandwiched between release sheets, the adhesive surface of the display unit and the adhesive surface of the optically functional member are brought into contact respectively with the surfaces of the film, with the release sheets removed, so that the display unit and the optically functional member are bonded together.

Thus, the adhesive composition of the present invention forms an adhesive layer superior in moisture resistance, peel resistance, and transparency, and the adhesive layer is suitable for production of a display unit integrally combined with an optically functional member. In addition, the display unit integrally combined with an optically functional member according to the present invention keeps an easy-to-see display for a long period of time, with a remote possibility of becoming hazy.

### EXAMPLES

The present invention will be described in more detail with reference to the following examples and comparative examples, which are not intended to restrict the scope thereof.

### Examples and Comparative Examples

In each example, an adhesive composition shown in Table 1 was dissolved in toluene, and the resulting solution was cast onto a PET release sheet so as to form a 300 µm thick film after drying. Thus there was obtained a film of the adhesive composition.

The trade names used in Table 1 are explained below.
"EV40Y": EVA containing 42 wt% of vinyl acetate (made by DuPont-Mitsui Polychemicals Co., Ltd.)
"Peroyl TCP": Organic peroxide, bis(4-t-butylcyclohexyl)-peroxydicarbonate (made by NOF Corporation)
"KBM 503": Silane coupling agent, γ-methacryloxypropyltrimethoxysilane (made by Shin-Etsu Silicones)
"Lightester HO": 2-hydroxyethyl methacrylate (made by Kyoeisha Chemical Co., Ltd.)
"Lightester HOA": 2-hydroxyethyl acrylate (made by Kyoeisha Chemical Co., Ltd.)
"K-900 AC": Reactive rosin ester oligomer (made by Shin-Nakamura Chemical Co., Ltd.)

Then, with the PET release sheet peeled off, the film of the adhesive composition was sandwiched between two polycarbonate plates. The resulting assembly was heated at 80°C for 1 hour under a pressure of 5 kgf/cm² in an autoclave, so that the adhesive film was cured. Thus, there was obtained a test piece consisting of two polycarbonate plates bonded together.

The test piece was tested for haze immediately after its production and 300 hours after its production. Haze is defined as Td/Te, where Td denotes the scattered transmittance and Te denotes the total transmittance. The results are shown in Table 1.

**Table 1**

| Ingredients (pbw) | Comparative Example | Example | | |
|---|---|---|---|---|
| | 1 | 1 | 2 | 3 |
| EV 40Y | 100 | 100 | 100 | 100 |
| Peroyl TCP | 1.0 | 1.0 | 1.0 | 1.0 |
| KBM 503 | 1.0 | 1.0 | 1.0 | 1.0 |
| Lightester HO | | 40 | | |
| Lightester HOA | | | 20 | |
| K-900 AC | | | | 20 |
| Haze (initial) | 0.8 | 0.9 | 0.8 | 0.9 |
| Haze (300 hours later) | 63.5 | 1.1 | 1.1 | 2.0 |

It is noted from Table 1 that the test pieces in Examples 1 to 3 are by far superior in haze to the test piece in Comparative Example 1. These test results suggest that the display apparatus having the layer of the adhesive composition will be hardly subject to hazing even in a highly humid atmosphere.

## Claims

1. An adhesive composition to be used for production of a display unit integrally combined with an optically functional member by bonding together the display unit and the optically functional member, wherein said adhesive composition is **characterized by** being incorporated with a compound having one or more hydroxyl groups.

2. The adhesive composition as defined in claim 1, wherein the compound having one or more hydroxyl groups is a (meth)acrylate compound having one or more hydroxyl groups or a rosin ester or terpene resin having one or more hydroxyl groups.

3. The adhesive composition as defined in claim 1 or 2, which further contains a base polymer.

4. The adhesive composition as defined in claim 1, 2, or 3, which further contains an organic peroxide and/or a photosensitizer.

5. The adhesive composition as defined in any one of claims 1 to 4, wherein the display unit is either a cathode-ray tube or a liquid crystal display and the optically functional member is any of antireflection glass, antireflection film, antistatic glass, antistatic film, electromagnetic wave shielding material, near infrared absorbing film, color filter, and touch panel, which are all transparent to light.

6. A display unit integrally combined with an optically functional member in which the display unit and the optically functional member are bonded together by means of an adhesive layer, wherein said adhesive layer is **characterized by** being formed from the adhesive composition defined in any one of claims 1 to 5.
